# EUROPEAN PATENT SPECIFICATION

(11) **EP 2 119 260 B1**
(45) Date of publication and mention of the grant of the patent: **18.03.2015**
(21) Application number: 07871253.6
(22) Date of filing: 26.10.2007
(51) Int. Cl.: H04W 4/02, H04W 8/18, H04W 84/02, H04W 84/12

(54) **METHOD AND SYSTEM FOR MANAGING CALLS IN A COMMUNICATION NETWORK**
VERFAHREN UND SYSTEM ZUR ANRUFVERWALTUNG IN EINEM KOMMUNIKATIONSNETZ
PROCÉDÉ ET SYSTÈME DE GESTION D'APPELS DANS UN RÉSEAU DE COMMUNICATIONS

(30) Priority: 20.12.2006 IN DE27462006
(43) Date of publication of application: 18.11.2009
(73) Proprietor: Motorola Mobility LLC, Libertyville, IL 60048 (US)
(72) Inventor: CHINTADA, Suresh K. Kumar, Bangalore Karnataka 560093 (IN); BANERJEE, Nilanjan, Bangalore Karnataka 560093 (IN)
(74) Representative: Boult Wade Tennant
(86) International application number: PCT/US2007/082595
(87) International publication number: WO 2008/079504

(56) References cited:
- US-A1- 2002 051 518
- US-A1- 2003 188 011
- US-A1- 2004 110 507
- US-A1- 2005 075 109
- US-A1- 2006 034 290
- US-A1- 2006 203 804
- BROK J ET AL: "ENABLING NEW SERVICES BY EXPLOITING PRESENCE AND CONTEXT INFORMATION IN IMS", BELL LABS TECHNICAL JOURNAL, WILEY, CA, US, vol. 4, no. 10, 1 January 2006 (2006-01-01), pages 83-100, XP001239288, ISSN: 1089-7089, DOI: 10.1002/BLTJ.20126

## Description

### FIELD OF THE INVENTION

The present invention relates, in general, to communication networks, and more specifically, to a method and system for managing calls in the communication networks.

### BACKGROUND OF THE INVENTION

A communication network is an interconnection of multiple communication devices that communicate with each other through wired or wireless communication links. Examples of communication networks include, but are not limited to, a Personal Area Network (PAN), a Local Area Network (LAN), a Wide Area Network (WAN), and a Metropolitan Area Network (MAN). Examples of communication devices include mobile phones, laptops, Personal Digital Assistants (PDAs), and the like. In order to communicate, these communication devices can use services such as Voice-over-Internet Protocol (VoIP) services, Video Conferencing services, Multimedia Messaging Services (MMS), Web services, and the like. A call made by a communication device in the communication network, to communicate with another communication device, can be routed to the intended communication device through a server. The location information of the intended communication device plays an important role in routing the call within the communication network.

However, in the case of wireless communication networks, the location of the communication devices in the communication network may change with the movement of the communication devices. As a result, the quality of service provided to the mobile device may be low, as the mobile device moves within the communication network. In addition, the cost of dialing/receiving calls on a particular communication device, for example, a mobile phone, may increase when the particular communication device moves out of a home network. As a result, the user of the mobile device may prefer receiving calls on a different communication device when the mobile device enters a particular area within the communication network. For example, the user of a mobile device may prefer receiving calls on his/her personal computer when the user is at home.

Currently, there are methods available for routing calls for a particular communication device to other communication devices in the communication network. One of these methods involves determining the location of a wireless communication device in a particular area of the communication network by means of a server, and then routing the calls to other communication devices through the server.

However, in the method discussed above, the location of the wireless communication device needs to be determined by the server. In addition, the process of the calls being routed by the server to the other communication devices depends only on the preference of the user of the wireless communication device.

In light of the foregoing discussion, there exists a need for a new method and system for managing calls in a communication network. The new method should not entirely depend on the server for routing the calls to other communication devices when the wireless communication device is in a particular area of the communication network.

US patent application publication no. US 2005/075109 describes a method that enables a mobile user having a terminal at least able to connect to a public land mobile network and a terminal at least able to connect to a wireless local area network forming part of a private network, on switching between the public land mobile network and the private network, to receive calls via the network more suited to his location. The method determines if the terminal able to connect to the wireless local area network is present in or absent from the coverage area of the wireless local area network. It activates call forwarding to a predetermined call forwarding number when the terminal at least able to connect to a wireless local area network is present in the coverage area of the wireless local area network and then deactivates call forwarding when the terminal is no longer present in the coverage area of the wireless local area network. For activating call forwarding, the method determines the location of a user in one of a plurality of cells of the wireless local area network, reads a plurality of call forwarding numbers stored in a table at an address corresponding to the user, and selects one of the call forwarding numbers as a function of a presence indication designating one of a plurality of cells constituting the wireless local area network.

### SUMMARY

In accordance with the present invention, there is provided a method for managing calls in a communication network and a switching device as recited in the accompanying claims.

### BRIEF DESCRIPTION OF THE FIGURES

The accompanying figures, where like reference numerals refer to identical or functionally similar elements throughout the separate views, and which, together with the detailed description below, are incorporated in and form part of the specification, serve to further illustrate various embodiments and explain various principles and advantages, all in accordance with the present invention.
**FIG. 1** illustrates an exemplary communication network, where various embodiments of the present invention can be practiced;
**FIG. 2** illustrates a block diagram of a switching device, in accordance with an embodiment of the present invention;
**FIG. 3** shows a flow diagram illustrating a method for managing calls in a communication network, in accordance with an embodiment of the present invention; and

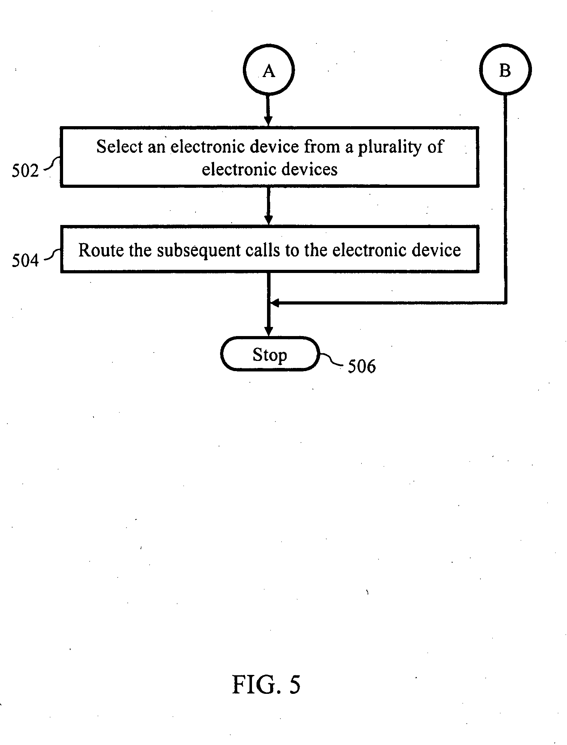

**FIGs. 4** and **5** show a flow diagram illustrating a method for managing calls in a communication network, in accordance with another embodiment of the present invention.

Skilled artisans will appreciate that elements in the figures are illustrated for simplicity and clarity and have not necessarily been drawn to scale. For example, the dimensions of some of the elements in the figures may be exaggerated, relative to other elements, to help in improving an understanding of the embodiments of the present invention. In addition, these figures are only logical blocks and do not represent physical forms.

### DETAILED DESCRIPTION

Before describing in detail the particular method and system for managing calls in a communication network, in accordance with various embodiments of the present invention, it should be observed that the present invention resides primarily in combinations of method steps related to the method and system for managing calls in the communication network. Accordingly, the apparatus components and method steps have been represented, where appropriate, by conventional symbols in the drawings, showing only those specific details that are pertinent for an understanding of the present invention, so as not to obscure the disclosure with details that will be readily apparent to those with ordinary skill in the art, having the benefit of the description herein.

In this document, the terms 'comprises,' 'comprising,' or any other variation thereof, are intended to cover a non-exclusive inclusion, such that a process, method, article or apparatus that comprises a list of elements does not include only those elements but can include other elements not expressly listed or inherent to such a process, method, article or apparatus. An element proceeded by 'comprises ... a' does not, without more constraints, preclude the existence of additional identical elements in the process, method, article or apparatus that comprises the element. The term 'another,' as used in this document, is defined as at least a second or more. The term 'includes', as used herein, is defined as comprising.

For an embodiment, a method for managing calls in a communication network is provided. The communication network includes a server and a switching device. The switching device is associated with a mobile device. The switching device and the mobile device are registered with the server. The method at the switching device includes determining the presence of the mobile device when the mobile device registers with the switching device. The mobile device registers with the switching device when the switching device enters a local area network. Further, the method includes sending a request to the server to compare the present location of the switching device with the location of the mobile device. Further, the method includes receiving a routing request from the server, to determine whether the subsequent calls for the mobile device should be forwarded to either the switching devices or the mobile device. The routing-request is received based on the comparison of the present location of the mobile device with the location of the switching device. Furthermore, the method includes sending an acknowledgement to the server to forward subsequent calls to either the switching devices or the mobile device. Moreover, the method includes selecting an electronic device from a plurality of electronic devices, which are associated with the switching device. The electronic device is selected when the acknowledgement is sent to the server to forward the subsequent calls to the switching device. The selection of the electronic device is based on a predefined selection policy. In addition, the method includes routing the subsequent calls to the electronic device.

For another embodiment, a switching device is provided. The switching device includes a location module that is configured to determine the presence of a mobile device in a local area network of the switching device. Further, the location module is configured to send a request to a server for comparing the present location of the mobile device with the location of the switching device. The switching device also includes a session manager that is communicably coupled to the location module. The session manager is configured to receive a routing request from the server. The routing-request is sent by the server to determine whether the subsequent calls should be forwarded to the mobile device or to the switching device. Further, the session manager is configured to send an acknowledgement to the server, to forward subsequent calls to either the switching device or the mobile device. Furthermore, the session manager is configured to select an electronic device from a plurality of electronic devices, based on a predefined selection policy. The plurality of electronic devices are associated with the switching device. Moreover, the session manager is configured to route the subsequent calls to the electronic device.

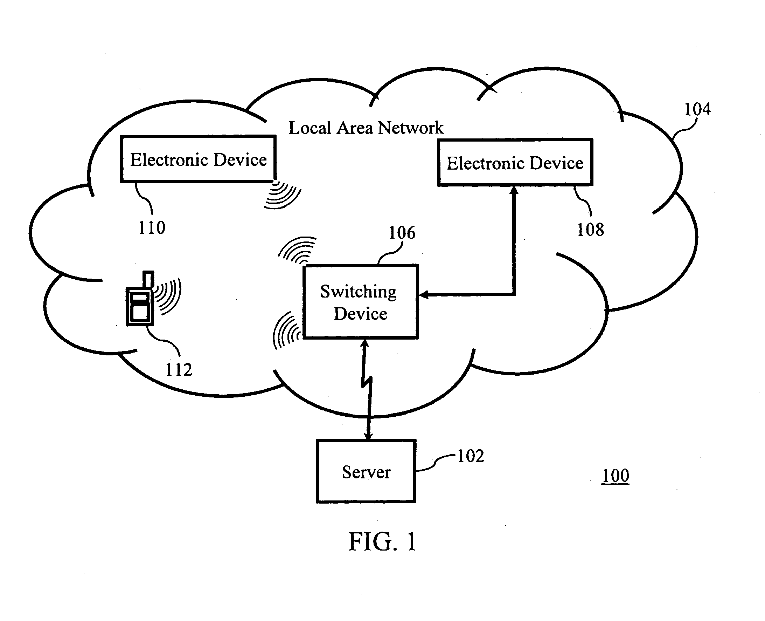

**FIG. 1** illustrates a communication network **100**, where various embodiments of the present invention can be practiced. The communication network **100** is an interconnection of communication devices spread over an area. Examples of such communication devices can include, but are not limited to, mobile phones, plain old telephone services (POTS) telephones, VOIP phones, personal computers, Personal Digital Assistants (PDAs), and software phones like Skype^{™}, GoogleTalk^{™}, and Xtalk^{™}. These communication devices can facilitate communication in the communication network **100**.

For the purpose of this description, the communication network **100** is shown to include a server **102**. The server **102** manages communication between the communication devices in the communication network **100.** For example, the server **102** can direct calls to the communication devices in the communication network **100**. An example of the server **102** can be an Internet Protocol Multimedia Subsystem (IMS) server. The server **102** can also locate the communication devices in the communication network **100.**

The communication network **100** also includes a LAN **104.** A LAN is an interconnection of a plurality of electronic devices in a local area. Examples of the local area include, but are not limited to, a home, an office, and a group of offices. For example, the LAN **104** can also be a Wireless Local Area Network (WLAN). The LAN **104** includes a switching device **106** and electronic devices **108** and **110.** An example of the switching device **106** can be a Residential Gateway (RG). The switching device **106** is associated with the server **102.** The switching device **106** can facilitate communication between the communication devices and the electronic devices **108** and **110**. The switching device **106** can communicate with the electronic device **108** through a wired communication link. Similarly, the switching device **106** can communicate with the electronic device **110** through a wireless communication link. Though the LAN **104** in the **FIG. 1** is shown to include only the electronic devices **108** and **110**, it will be apparent to a person ordinarily skilled in the art that the LAN **104** can include more number of electronic devices than shown in the **FIG. 1**. The electronic devices **108** and **110** can communicate with the communication devices in the communication network **100** through the server **102** via the switching device **106**. The electronic devices **108** and **110** can be registered with the switching device **106**. The electronic devices **108** and **110** can also communicate among themselves through the switching device **106**. Examples of the electronic devices **108** and **110** include, but are not limited to, mobile phones, VOIP phones, personal computers, PDAs, and software phones like Skype^{™}, GoogleTalk^{™}, and Xtalk^{™}.

The LAN **104** also includes a mobile device **112**. The mobile device **112** can establish communication with the communication devices through the server **102** when the mobile device **112** is present in the LAN **104**. The mobile device **112** can also establish communication with the communication devices through the server **102** when the mobile device **112** is not present in the LAN **104.** The switching device **106** and the mobile device **112** need to be registered with the server **102.** For an embodiment, the mobile device **112** can register with the switching device **106** when the mobile device **112** enters the LAN **104**. The mobile device **112** can communicate with the switching device **106** for directing of subsequent calls by the server **102** to the switching device **106**. The directing of the subsequent calls by the server **102** can be based on the preferences associated with the user of the mobile device **112**. The server **102** can also direct the call for the mobile device **112** to an electronic device, for example, the electronic device **108,** through the switching device **106**, when the mobile device **112** enters the LAN **104.** Similarly, a call can be received by the mobile device **112** through the server **102** when the mobile device **112** is present outside the LAN **104**.

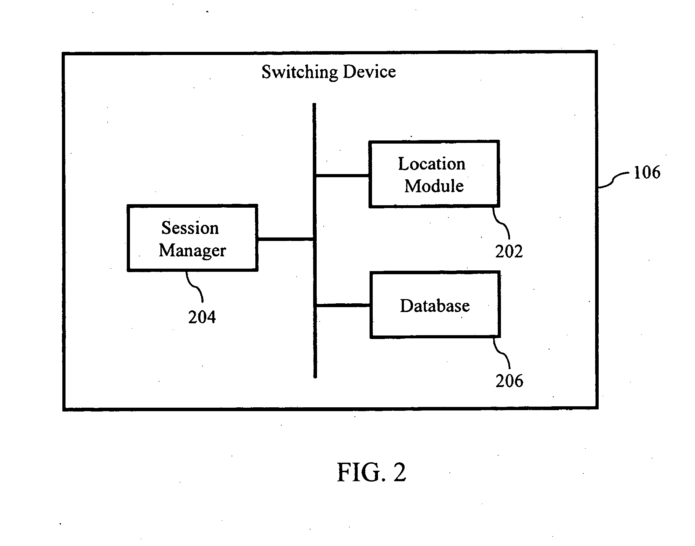

**FIG. 2** illustrates a block diagram of the switching device **106**, in accordance with an embodiment of the present invention. Those ordinarily skilled in the art would appreciate that the switching device **106** can include all or even a fewer number of components than the components shown in **FIG. 2**. Further, those ordinarily skilled in the art would understand that the switching device **106** can include additional components that are not shown here, since they are not germane to the operation of the switching device **106**, in accordance with the inventive arrangements. To describe the switching device **106**, reference will be made to **FIG. 1**, although it should be understood that the switching device **106** can be implemented in any other suitable environment or network.

The switching device **106** includes a location module **202** and a session manager **204**. The location module **202** can determine the presence of the mobile device **112** in the LAN **104** when the mobile device **112** registers with the switching device **106**. The location module **202** can then notify the server **102** regarding the presence of the mobile device **112** in the LAN **104**. The location module **202** can also determine the location of the electronic devices **108** and **110**. The location module **202** can inform the server **102** regarding the exit of the mobile device **112** when the mobile device **112** leaves the LAN **104**. Further, the location module **202** can send a request to the server **102** for comparing the location of the switching device **106** with the location of the mobile device **112**. The location module **202** can send the location parameters of the switching device **106** to the server **102**. After the comparison of the location of the switching device **106** and the mobile device **112**, a routing request is received by the switching device **106** from the server **102**. This routing request is sent by the server **102** to determine whether subsequent calls should be forwarded to either the mobile device **112** or the switching device **106**.

Thereafter, the session manager **204** determines the user preference for forwarding subsequent calls that are meant for the mobile device **112**. Accordingly, the session manager **204** can send an acknowledgement to the server **102** to forward the subsequent calls. For an embodiment, the session manager **204** can send an acknowledgement to the server **102**, to forward subsequent calls to the switching device **106**. For another embodiment, the session manager **204** can send an acknowledgement to the server **102,** to forward subsequent calls to the mobile device **112**. When it is determined by the session manager **204** to forward the subsequent calls to the switching device **106,** the session manager **204** can select an electronic device, for example, the electronic device **110.** The electronic device **110** can be selected, based on a predefined selection policy. For an embodiment, the predefined selection policy is based on the characteristic of the subsequent calls. For example, when the server **102** directs a video call to the switching device **106,** the session manager **204** selects the electronic device **110** to route subsequent calls. The electronic device **110** is selected by the session manager **204,** since the electronic device **110** can support the functions required for the video call. For another embodiment, the predefined selection policy can be based on data provided by the user to route the subsequent calls. For example, when the server **102** directs a video call to the switching device **106,** the session manager **204** refers to the data provided by the user. Depending on the data provided by the user, the session manager **204** selects the electronic device **110** to route the subsequent calls. For yet another embodiment, the predefined selection policy can be based on the capability of the electronic devices **108** and **110**.

The session manager **204** can then route the subsequent calls to the electronic device **110.** The session manager **204** can use several functionalities to route the subsequent calls in the LAN **104.** Examples of such functionalities include, but are not limited to, the Private Branch Exchange (PBX) functionality, the Session Initiation Protocol Back-to-Back User Agent (SIP B2BUA), the SIP Proxy and the SIP Registrar functionalities.

The session manager **204** can also associate the identity of the mobile device **112** with the identity of the switching device **106**. The identity of the mobile device **112** can be a personal identity. An example of this personal identity can be a Subscriber Identity Module (SIM) identifier. The identity of the switching device **106** can also be a home identity. An example of this home identity can be a Removable User Identity Module (RUIM) identifier. For an embodiment, the personal identity and the home identity are stored with the server **102** as public identities.

For an embodiment, the switching device **106** can include a database **206**, which can store the identities of the mobile device **112,** the switching device **106**, and the electronic devices **108** and **110**. The database **206** can also store location information of the switching device **106** and the electronic devices **108,** and **110.** Further, the database **206** can store the preference for selecting one of the electronic devices **108** and **110** to route the subsequent calls. For example, the database **206** can store the preference of selecting a personal computer when a VOIP call is directed to the switching device **106.**

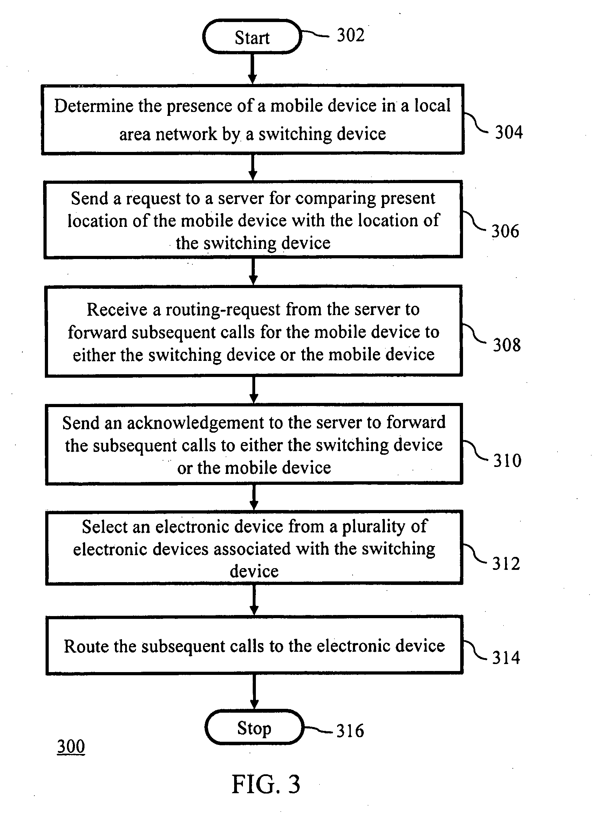

**FIG. 3** is a flow diagram illustrating a method **300** for managing calls in the communication network **100,** in accordance with an embodiment of the present invention. To describe the flow diagram, reference will be made to **FIG. 1** and **FIG. 2****,** although it should be understood that the method **300** can be implemented in any other suitable environment or network. Moreover, the invention is not limited to the order in which the steps are listed in the method **300**.

At step **302,** the method for managing calls in the communication network **100** is initiated. The server **102** can manage the calls for the communication devices present in the communication network **100.** The switching device **106** and the mobile device **112** are registered with the server **102.** The mobile device **112** can also communicate with the switching device **106.** At step **304,** the presence of the mobile device **112** is determined by the switching device **106** when the mobile device **112** registers with the switching device **106.** The presence of the mobile device **112** is determined as the mobile device **112** enters the LAN **104.** At step **306,** the switching device **106** sends a request to the server **102** to compare the location of the mobile device **112** with that of the switching device **106.** The server **102** then compares the location the mobile device **112** with that of the switching device **106.** Depending on the location comparison, the server **102** sends a routing-request to the switching device **106.**

At step **308,** the switching device **106** receives the routing request from the server **102.** The routing request is sent by the server **102** to determine whether the subsequent calls for the mobile device **112** should be directed to the switching device **106.** The switching device **106** then determines the user preference associated with the mobile device **112,** to direct the subsequent calls to either the mobile device **112** or the switching device **106.** For example, a user of the mobile device **112** can decide to direct subsequent calls to the switching device **106.** Similarly, the user can prefer that the server **102** directs subsequent calls to the mobile device **112.** Depending on the user preference, an acknowledgement is sent to the server **102** by the switching device **106** at step **310.** For an embodiment, the acknowledgement can be sent to the server **102** to direct the subsequent calls to the switching device **106**. For another embodiment, the acknowledgement can be sent to the server **102** to direct the subsequent calls to the mobile device **112**.

At step **312,** the switching device **106** selects an electronic device, for example, an electronic device **110,** when the subsequent calls are directed to the switching device **106.** The electronic device, for example, the electronic device **110** is selected based on the predefined selection policy. For an embodiment, the predefined selection policy is based on the characteristics of the subsequent calls. For example, when the server **102** directs a video call to the switching device **106,** the switching device **106** selects the electronic device **110** to route the subsequent calls. The electronic device **110** is selected since the electronic device **110** can support the functions required for the video call. At step **314,** the switching device **106** routes the subsequent calls to the electronic device **110.** The method is terminated at step **316.**

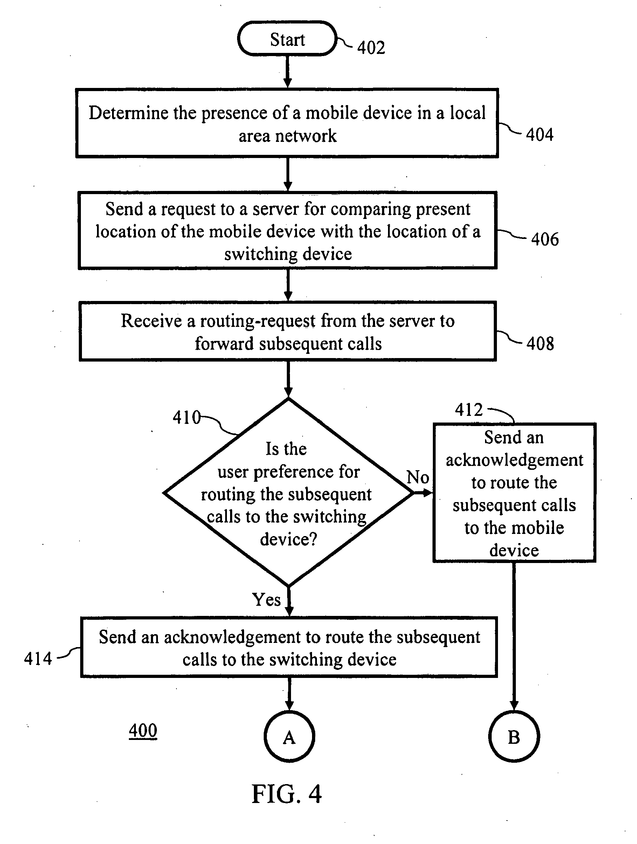

**FIG. 4** is a flow diagram illustrating a method **400** for managing calls in the communication network **100,** in accordance with various embodiments of the present invention. To describe the method **400,** reference will be made to **FIG. 1** and **FIG. 2****,** although it should be understood that the method **400** can be implemented in any other suitable environment or network. Moreover, the invention is not limited to the order in which the steps are listed in the method **400.**

At step **402,** the method for managing calls in the communication network **100** is initiated. The server **102** can manage the calls for the communication devices in the communication network **100.** The switching device **106** and the mobile device **112** are registered with the server **102.** For an embodiment, the mobile device **112** can use a cellular wide area network to communicate with the server **102.** For another embodiment, the switching device **106** can use a broadband modem to communicate with the server **102.** The mobile device **112** can also communicate with the switching device **106.** For an embodiment, the mobile device **112** can use a WLAN modem to communicate with the switching device **106.** At step **404,** the presence of the mobile device **112** is determined by the location module **202** when the mobile device **112** registers with the session manager **204.as** the mobile device **112** enters the LAN **104.** The session manager **204** can then associate the personal identity of the mobile device **112** with the home identity of the switching device **106**.

At step **406,** a request is sent by the location module **202** to the server **102** for comparing the location of the mobile device **112** with that of the switching device **106.** The server **102** then compares the location of the mobile device **112** and the switching device **106.** The location module **202** and the mobile device **112** can send their location parameters to the server **102** to compare the location of the switching device **106** with that of the mobile device **112**. For example, the location module **202** and the mobile device **112** can send the position coordinates of the present location of the switching device **106** and the mobile device **112**. Based on the location comparison, the server **102** sends a routing-request to the session manager **204**.

At step **408,** the session manager **204** receives the routing request from the server **102.** The server **102** sends the routing-request when the present location of the mobile device **112** is determined to be present within the LAN **104**. The routing-request is sent by the server **102** to determine whether the subsequent calls for the mobile device **112** should be directed to the switching device **106.** The directing of the subsequent calls to the mobile device **112** or the switching device **106** is based on a user preference associated with the mobile device **112.** For an embodiment, the user of the mobile device **112** can decide to direct the subsequent calls to the switching device **106.** For another embodiment, the user can decide to direct the subsequent calls to the mobile device **112.**

At step **410,** the session manager **204** determines whether the subsequent calls should be directed by the server **102** to the switching device **106,** based on the user preference associated with the mobile device **112.**

If it is determined at step **410** that the subsequent calls are to be directed to the mobile device **112,** then step **412** is performed. At step **412,** an acknowledgement is sent to the server **102** by the session manager **204,** to direct the subsequent calls to the mobile device **112.** The subsequent calls are then directed to the mobile device **112** by the server **102.** If it is determined at step **410** that the subsequent calls are to be directed to the switching device **106,** then step **414** is performed. At step **414,** an acknowledgement is sent by the session manager **204** to the server **102** to direct the subsequent calls for the mobile device **112** to the switching device **106.** The subsequent calls are then directed to the switching device **106** by the server **102.** At step **502,** an electronic device, for example, the electronic device **110,** is selected by the session manager **204** to route the subsequent calls, based on a predefined selection policy.

For an embodiment, the predefined selection policy is based on the characteristics of the subsequent calls. For example, when the server **102** directs a video call to the switching device **106,** the session manager **204** selects the electronic device **110** for routing the subsequent calls, since the electronic device **110** can support the functions required for the video call. For another embodiment, the predefined selection policy can be based on data provided by the user, to route the subsequent calls. For example, when the server **102** directs a video call to the switching device **106,** the session manager **204** refers to the data provided by the user. Depending on the data provided by the user, the session manager **204** selects the electronic device **110** for routing the subsequent calls. For yet another embodiment, the predefined selection policy can be based on the capabilities of the electronic devices **108** and **110.** For example, when a video conferencing session is initiated for the mobile device **112,** the electronic device **108** is selected since the electronic device **108** is capable of managing the session.

At step **504,** subsequent calls are routed by the session manager **204** to the electronic device **110,** based on the predefined selection policy. The method is terminated at step **506**.

Various embodiments of the present invention, as described above, provide a method and system for managing calls in a communication network. The present invention uses the location awareness of the mobile device and the switching device. The present invention uses this location awareness to route the incoming communication for the mobile device through the switching device to a communication device associated with the switching device. For example, VoIP calls for the mobile device can be routed by the switching device to a personal computer, when the user of the mobile device is at his/her home. The present invention also enables the routing of the incoming communication for the mobile device to a communication device based on a predefined selection policy. This predefined selection policy can be formulated by the user of the mobile device. As a result, the user of the mobile device is able to receive an incoming communication that is not supported by the mobile device, on a different communication device that is capable of supporting this communication.

It will be appreciated that the method and system for managing calls in a communication network, described herein, may comprise one or more conventional processors and unique stored program instructions that control the one or more processors, to implement, in conjunction with certain non-processor circuits, some, most, or all of the functions of the system described herein. The non-processor circuits can include, but are not limited to, signal drivers, clock circuits, power-source circuits and user-input devices. As such, these functions may be interpreted as steps of a method to enable control of the one or more devices. Alternatively, some or all the functions could be implemented by a state machine that has no stored program instructions, or in one or more application-specific integrated circuits (ASICs), in which each function, or some combinations of certain of the functions, are implemented as custom logic. Of course, a combination of the two approaches could also be used. Thus, methods and means for these functions have been described herein.

It is expected that one with ordinary skill, notwithstanding possibly significant effort and many design choices motivated by, for example, available time, current technology and economic considerations, when guided by the concepts and principles disclosed herein, will be readily capable of generating such software instructions, programs and ICs with minimal experimentation.

In the foregoing specification, the invention and its benefits and advantages have been described with reference to specific embodiments. However, one of with ordinary skill in the art would appreciate that various modifications and changes can be made without departing from the scope of the present invention, as set forth in the claims below. Accordingly, the specification and figures are to be regarded in an illustrative rather than a restrictive sense, and all such modifications are intended to be included within the scope of the present invention. The benefits, advantages, solutions to problems and any element(s) that may cause any benefit, advantage or solution to occur or become more pronounced are not to be construed as critical, required or essential features or elements of any or all the claims. The invention is defined solely by the appended claims.

## Claims

1. A method for managing calls in a communication network (100), the communication network comprising a server (102) and a switching device (106) associated with a mobile device (112), the switching device (106) and the mobile device (112) being registered with the server (102), the switching device (106) being included in a local area network (104), the method at the switching device (106) comprising:
determining (304) the presence of the mobile device (112) in the local area network (104) by the switching device (106), when the mobile device (112) registers with the switching device (106) as the mobile device enters the local area network (104);
sending (306), by the switching device (106), a request to the server (102) for comparing present location of the mobile device (112) with the location of the switching device (106);
receiving (308), by the switching device (106), a routing-request from the server (102) requesting that the switching device (106) determine to which one of the mobile device and the switching device to forward subsequent calls for the mobile device, the routing-request being received based on the comparison of the present location of the mobile device (112) with the location of the switching device (106);
sending (310), by the switching device (106), an acknowledgement to the server (102) instructing the server (102) to forward the subsequent calls to one of the switching device (106) and the mobile device (112);
selecting (312), by the switching device (106), an electronic device from a plurality of electronic devices (108, 110) associated with the switching device (106) when the acknowledgement is sent to the server (102) to forward the subsequent calls to the switching device (106), wherein the electronic device is selected based on a predefined selection policy; and
routing (314), by the switching device (106), the subsequent calls to the electronic device.

2. The method as recited in claim 1, wherein the subsequent calls are forwarded to the mobile device (112) when the acknowledgement is sent to the server (102) to forward the subsequent calls to the mobile device (112).

3. The method as recited in claim 1 further comprising notifying the server (102) regarding the presence of the mobile device (112) within the local area network (104) when the mobile device (112) registers with the switching device (106).

4. The method as recited in claim 1 further comprising informing the server (102) regarding the exit of the mobile device (112) when the mobile device (112) leaves the local area network (104).

5. The method as recited in claim 1, wherein the acknowledgement is sent based on user preferences associated with the mobile device (112).

6. The method as recited in claim 1, wherein the routing-request is received when the present location of the mobile device (112) lies within the local area network (104).

7. The method as recited in claim 1 further comprising sending location information of the switching device (106) to the server (102).

8. The method as recited in claim 1, wherein the predefined selection policy is based on the characteristics of the subsequent calls.

9. The method as recited in claim 1, wherein the predefined selection policy is based on user preferences associated with the mobile device (112).

10. A switching device (106) comprising:
a location module (202) configured to:
determine the presence of a mobile device (112) in a local area network (104) of the switching device (106); and
send a request to a server (102) for comparing the present location of the mobile device (112) with the location of the switching device (106); and
a session manager (204) communicably coupled to the location module (202), wherein the session manager (204) is configured to:
receive a routing-request from the server (102) requesting that the switching device (106) determine to which one of the mobile device and the switching device to forward subsequent calls for the mobile device;
send an acknowledgement to the server (102) instructing the server (102) to forward the subsequent calls to one of the switching device (106) and the mobile device (112);
select an electronic device from a plurality of electronic devices (108, 110) associated with the switching device (106) based on a predefined selection policy; and
route the subsequent calls to the electronic device.

## Patentansprüche

1. Verfahren zur Anrufsverwaltung in einem Kommunikationsnetz (100), wobei das Kommunikationsnetz einen Server (102) und eine mit einer mobilen Vorrichtung (112) verbundene Schaltvorrichtung (106) aufweist, wobei die Schaltvorrichtung (106) und die mobile Vorrichtung (112) beim Server (102) registriert sind, wobei die Schaltvorrichtung (106) in einem lokalen Netz (104) enthalten ist, wobei das Verfahren an der Schaltvorrichtung (106) Folgendes aufweist:
Festlegen (304) des Vorhandenseins der mobilen Vorrichtung (112) in dem lokalen Netz (104) durch die Schaltvorrichtung (106), wenn sich die mobile Vorrichtung (112) bei der Schaltvorrichtung (106) registriert, während die mobile Vorrichtung in das lokale Netz (104) gelangt;
Senden (306), durch die Schaltvorrichtung (106), einer Anfrage an den Server (102), um den aktuellen Standort der mobilen Vorrichtung (112) mit dem Standort der Schaltvorrichtung (106) zu vergleichen;
Empfangen (308), durch die Schaltvorrichtung (106), einer Routing-Anfrage von dem Server (102), die die Schaltvorrichtung (106) dazu auffordert, festzulegen, ob nachfolgende Anrufe für die mobile Vorrichtung an die mobile Vorrichtung oder die Schaltvorrichtung weitergeleitet werden, wobei die Routing-Anfrage basierend auf dem Vergleich des aktuellen Standorts der mobilen Vorrichtung (112) mit dem Standort der Schaltvorrichtung (106) empfangen wird;
Senden (310), durch die Schaltvorrichtung (106), einer Bestätigung an den Server (102), die den Server (102) dazu anweist, die nachfolgenden Anrufe an die Schaltvorrichtung (106) oder die mobile Vorrichtung (112) weiterzuleiten;
Auswählen (312), durch die Schaltvorrichtung (106), einer elektronischen Vorrichtung aus einer Mehrzahl von mit der Schaltvorrichtung (106) verbundenen elektronischen Vorrichtungen (108, 110), wenn die Bestätigung an den Server (102) gesendet wird, die nachfolgenden Anrufe an die Schaltvorrichtung (106) weiterzuleiten, wobei die elektronische Vorrichtung basierend auf einer vorher festgelegten Auswahlstrategie ausgewählt wird; und
Routen (314), durch die Schaltvorrichtung (106), der nachfolgenden Anrufe an die elektronische Vorrichtung.

2. Verfahren nach Anspruch 1, wobei die nachfolgenden Anrufe an die mobile Vorrichtung (112) weitergeleitet werden, wenn die Bestätigung an den Server (102) gesendet wird, die nachfolgenden Anrufe an die mobile Vorrichtung (112) weiterzuleiten.

3. Verfahren nach Anspruch 1, das ferner ein Benachrichtigen des Servers (102) über das Vorhandensein der mobilen Vorrichtung (112) innerhalb des lokalen Netzes (104) aufweist, wenn sich die mobile Vorrichtung (112) bei der Schaltvorrichtung (106) registriert.

4. Verfahren nach Anspruch 1, das ferner ein Informieren des Servers (102) über das Verlassen der mobilen Vorrichtung (112) aufweist, wenn die mobile Vorrichtung (112) das lokale Netz (104) verlässt.

5. Verfahren nach Anspruch 1, wobei die Bestätigung basierend auf mit der mobilen Vorrichtung (112) verbundenen Nutzerpräferenzen gesendet wird.

6. Verfahren nach Anspruch 1, wobei die Routing-Anfrage empfangen wird, wenn der aktuelle Standort der mobilen Vorrichtung (112) innerhalb des lokalen Netzes (104) liegt.

7. Verfahren nach Anspruch 1, das ferner ein Senden von Standortinformationen der Schaltvorrichtung (106) an den Server (102) aufweist.

8. Verfahren nach Anspruch 1, wobei die vorher festgelegte Auswahlstrategie auf den Eigenschaften der nachfolgenden Anrufe basiert.

9. Verfahren nach Anspruch 1, wobei die vorher festgelegte Auswahlstrategie auf mit der mobilen Vorrichtung (112) verbundenen Nutzerpräferenzen basiert.

10. Schaltvorrichtung (106), welche Folgendes umfasst:
ein Lokalisationsmodul (202), welches derart konfiguriert ist, dass es:
das Vorhandensein einer mobilen Vorrichtung (112) in einem lokalen Netz (104) der Schaltvorrichtung (106) festlegt; und
eine Anfrage an einen Server (102) sendet, damit dieser den aktuellen Standort der mobilen Vorrichtung (112) mit dem Standort der Schaltvorrichtung (106) vergleicht; und
einen Session Manager (204), welcher mit dem Lokalisationsmodul (202) kommunizierbar gekoppelt ist, wobei der Session Manager (204) derart konfiguriert ist, dass er:
von dem Server (102) eine Routing-Anfrage empfängt, welche die Schaltvorrichtung (106) dazu auffordert, festzulegen, ob nachfolgende Anrufe für die mobile Vorrichtung an die mobile Vorrichtung oder die Schaltvorrichtung weitergeleitet werden;
eine Bestätigung an den Server (102) sendet, welche den Server (102) dazu anweist, die nachfolgenden Anrufe an die Schaltvorrichtung (106) oder die mobile Vorrichtung (112) weiterzuleiten;
eine elektronische Vorrichtung aus einer Mehrzahl von mit der Schaltvorrichtung (106) verbundenen elektronischen Vorrichtungen (108, 110) basierend auf einer vorher festgelegten Auswahlstrategie auswählt; und
die nachfolgenden Anrufe an die elektronische Vorrichtung routet.

## Revendications

1. Procédé de gestion d'appels dans un réseau de communications (100), le réseau de communications comprenant un serveur (102) et un dispositif de commutation (116) associé à un dispositif mobile (112), le dispositif de commutation (106) et le dispositif mobile (112) étant enregistrés avec le serveur (102), le dispositif de commutation (106) étant inclus dans un réseau local (104), le procédé au dispositif de commutation (106) comprenant :
déterminer (304) la présence du dispositif mobile (112) dans le réseau local (104) par le dispositif de commutation (106), lorsque le dispositif mobile (112) est registré avec le dispositif de commutation (106) lorsque le dispositif mobile entre dans le réseau local (104) ;
envoyer (306) par le dispositif de commutation (106) une requête au serveur (102) pour comparer l'emplacement présent du dispositif mobile (112) avec l'emplacement du dispositif de commutation (106) ;
recevoir (308), par le dispositif de commutation (106), une requête de routage du serveur (102) demandant que le dispositif de commutation (106) détermine celui parmi le dispositif mobile et le dispositif de commutation auquel il faut transmettre des appels entrants pour le dispositif mobile, la requête de routage étant reçue sur la base de la comparaison du présent emplacement du dispositif mobile (112) avec l'emplacement du dispositif de commutation (106) ;
envoyer (310), par le dispositif de commutation (106), un accusé de réception au serveur (102) instruisant le serveur (102) de transmettre les appels suivants à l'un parmi le dispositif de commutation (106) et le dispositif mobile (112) ;
sélectionner (312), par le dispositif de commutation (106), un dispositif électronique d'une pluralité de dispositifs électroniques (108, 110) associés au dispositif de commutation (106) lorsque l'accusé de réception est envoyé au serveur (102) pour transmettre les appels suivants au dispositif de commutation (106), où le dispositif électronique est sélectionné sur la base d'une police de sélection prédéfinie ; et
router (314), par le dispositif de commutation (106), les appels suivants au dispositif électronique.

2. Procédé selon la revendication 1, dans lequel les appels suivants sont transmis au dispositif mobile (112) lorsque l'accusé de réception est envoyé au serveur (102) pour transmettre les appels suivants au dispositif mobile (112).

3. Procédé selon la revendication 1, comprenant en outre la notification au serveur (102) se rapportant à la présence du dispositif mobile (112) dans le réseau local (104) lorsque le dispositif mobile (112) est enregistré avec le dispositif de commutation (106).

4. Procédé selon la revendication 1, comprenant en outre l'information du serveur (102) concernant la sortie du dispositif mobile (112) lorsque le dispositif mobile (112) quitte le réseau local (104).

5. Procédé selon la revendication 1, dans lequel l'accusé de réception est envoyé sur la base de préférences de l'utilisateur associées au dispositif mobile (112).

6. Procédé selon la revendication 1, dans lequel la requête de routage est reçue lorsque le présent emplacement du dispositif mobile (112) se situe dans le réseau local (104).

7. Procédé selon la revendication 1, comprenant en outre l'envoi de l'information de localisation du dispositif de commutation (106) au serveur (102).

8. Procédé selon la revendication 1, dans lequel la police de sélection prédéfinie est basée sur les caractéristiques des appels suivants.

9. Procédé selon la revendication 1, dans lequel la police de sélection prédéfinie est basée sur des préférences de l'utilisateur associées au dispositif mobile (112).

10. Dispositif de commutation (106) comprenant :
un module de localisation (202) configuré pour :
déterminer la présence d'un dispositif mobile (112) dans un réseau local (104) du dispositif de commutation (106) ; et
envoyer une requête à un serveur (102) pour comparer le présent emplacement du dispositif mobile (112) avec l'emplacement du dispositif de commutation (106) ; et
un gestionnaire de session (204) couplé de manière communicative au module d'emplacement (202), où le gestionnaire de session (204) est configuré pour :
recevoir une requête de routage du serveur (102) demandant que le dispositif de commutation (106) détermine le dispositif parmi le dispositif mobile et le dispositif de commutation auquel les appels suivants pour le dispositif mobile doivent être transmis ;
envoyer un accusé de réception au serveur (102) instruisant le serveur (102) de transmettre les appels suivants à l'un parmi le dispositif de commutation (106) et le dispositif mobile (112) ;
sélectionner un dispositif électronique d'une pluralité de dispositifs électroniques (108, 110) associés au dispositif de commutation (106) sur la base d'une police de sélection prédéfinie ; et
diriger les appels suivants au dispositif électronique.
